# EUROPEAN PATENT APPLICATION

(11) **EP 0 920 182 A2**
(43) Date of publication of application: **02.06.1999**
(21) Application number: 98309739.5
(22) Date of filing: 27.11.1998
(51) Int. Cl.: H04N 1/00

(54) **A facsimile device and method**

(30) Priority: 28.11.1997 KR 9763641
(71) Applicant: SAMSUNG ELECTRONICS CO., LTD., Suwon-City, Kyungki-do (KR)
(72) Inventor: Oak, Seung-soo, Sungnam, Kyonggi-do (KR)
(74) Representative: Hutchinson, Glenn Stanley (GB)

(57) **Abstract**

The present invention relates to a facsimile device including a device capable of transferring and receiving a message in a user-to-user signalling manner and an S-type interface card, which is able to be connected to an integrated service digital network. The facsimile device transfers and receives messages through a D channel which is conventionally used for transferring signals in a user signalling manner even though the facsimile device communicates with another facsimile device through B channels of an integrated service digital network to transfer and receive image data. Accordingly, there is an advantage in that the channels provided to the facsimile device can be efficiently used.

## Description

The present invention relates to a facsimile device and method.

Generally, a facsimile device, as is well known, is an assembly of a scanner for scanning a document, a printer for printing image data, and a device for transferring and receiving the image data to/from another remote facsimile device.

An analog facsimile device according to the conventional art is connected to an integrated service digital network (hereinafter, referred to as ISDN) by means of a terminal adapter. An analog facsimile device is a facsimile device that uses in-band signalling, to transfer data as distinguished from a digital facsimile device which is inherently compatible with ISDN. However, the terminal adapter only converts digital signals transferred from the ISDN into analog signals to provide the facsimile device with an analog signal and converts an analog signal transferred from the facsimile device into digital signals to provide the ISDN with the digital signal. Therefore, an analog facsimile device cannot be provided with the additional services supported by the ISDN.

The additional service of the ISDN can be utilised by the facsimile device upon the condition that the facsimile device has an ability to analysing a class three message received from the ISDN. Even if the analog type facsimile device is connected to the ISDN through the terminal adapter, the facsimile device still cannot be supplied with the additional service via a class three message because the terminal adapter only converts signals in a voice band into the digital signals.

Therefore, when the analog type facsimile device is connected to the ISDN through the terminal adapter, the analog facsimile device communicates with another facsimile devices through the ISDN by using the voice band. Therefore, the analog facsimile device must have a terminal adapter that can receive the additional services from the ISDN or must have a specific means of communication between the terminal adapter, such as, for example, an RS-232C type serial port, respectively provided on the terminal adapter and the analog facsimile device together with appropriate software.

The terminal adapter analyses the class three message received from the ISDN and informs the analog facsimile device of the additional services that are able to be utilised by the facsimile device. The analog facsimile device informs the terminal adapter of the kind of additional ISDN service required by the facsimile device.

The analog facsimile device has to basically include a displaying device such as a liquid crystal display to provide the user with a notification of the additional services. Moreover, the analog facsimile device must also includes function keys to allow the user to select one of the additional services.

It is an object of the present invention to at least mitigate some of the problems of the prior art.

Accordingly, a first aspect of the present invention provides a facsimile device comprising a message transferring and receiving device for transferring and receiving a message in a user-to-user signalling manner and an S-type interface card, which is able to be connected to an integrated service digital network, the device comprising:
an input means for inputting a message to be transferred;
storage means for storing an input message;
transfer means for transferring a stored message in the user to user signalling manner;
receiving means for receiving a transferred message;
output means for outputting a received message; and
a controller for receiving input signals from the input means, storage means, transfer means, receiving means and output means and for generating a control signal corresponding to each input signal.

Advantageously, the present invention provides a facsimile device having a user-to-user signalling function, which contains a S-type interface card and a method for transferring and receiving a message in an user-to-user manner.

An embodiment provides a facsimile device, wherein the input means and the output means comprise keys forming part of the same key pad.

A second aspect of the present invention provides a method for transferring and receiving a message using a facsimile device having an S-type interface card, the method comprising the steps of:
inputting the message to be transferred;
transferring the input message in an user-to-user signalling manner; and
receiving the transferred message in the user-to-user signalling manner.

Preferably, an embodiment provides a method for transferring and receiving a message further comprising the step of storing the message to be transferred after the step of inputting the message to be transferred, wherein the stored message is transferred.

A further embodiment provides a method for transferring and receiving a message by wherein the step of inputting the message includes the steps of:
displaying a list of stored messages including the message to be transferred; and
selecting the message to be transferred from the list of stored messages.

A still further embodiment provides a method for transferring and receiving a message wherein the step of receiving the message to be transferred includes the steps of:
outputting the received message on a display;
determining whether or not to print the received message; and
printing the received message when an order to print the received message has been input.

Preferably, the steps of transferring and receiving utilise the D-channel of an ISDN.

Preferably, image data of a facsimile is transferred or received using a B-channel of the ISDN.

Embodiments of the present invention will now be described, by way of example only, with reference to the accompanying drawings in which:
figure 1 is a schematic block diagram showing a facsimile device having an S-type interface card according to the present invention which is connected to an integrated service digital network;
figure 2 is a block diagram showing a construction of an user-to-user signalling device according to an embodiment of the present invention;
figure 3 is a view showing an operating panel of a facsimile device according to the embodiment of the present invention, in which a key for inputting a message has been selected;
figure 4 is a view showing the operating panel of the facsimile device according to the embodiment of the present invention, in which a key for storing a message has been selected;
figure 5 is a view showing the operating panel of the facsimile device according to the embodiment the present invention, in which a key for transferring a message has been selected;
figure 6 is a view showing the operating panel of the facsimile device according to the embodiment of the present invention when a message has been received by the facsimile device;
figure 7 is a view showing the operating panel of the facsimile device according to the embodiment the present invention, in which a key for printing the message has been selected; and
figure 8 is a flow chart showing a process of storing and transferring an input message according to the embodiment of the present invention.

The user-to-user signalling (hereinafter, referred to as USS), as one of the additional services provided by the ISDN, is a function by which the facsimile device transfers and receives a brief message to/from another facsimile device by using a D-channel as a channel for signals while the user transfers and receives voice data and image data to/from the other facsimile device using a B channel or B channels of the ISDN.

The USS function is generally divided into several functions, that is, a transferring function for transferring a call setup message carrying a user's message, a transferring function for transferring a separate user's message while processing the call setup message, and a transferring function for transferring the user's message when the facsimile device is connected to the other facsimile device.

As described above, a user's message is added to the class three message for controlling a call signal and transferred and received to/from the other facsimile device. On the other hand, only the user's message may be transferred and received to/from the other facsimile device. Transferring and receiving messages between the users is governed under the rule Q.931 of the ITU-T.

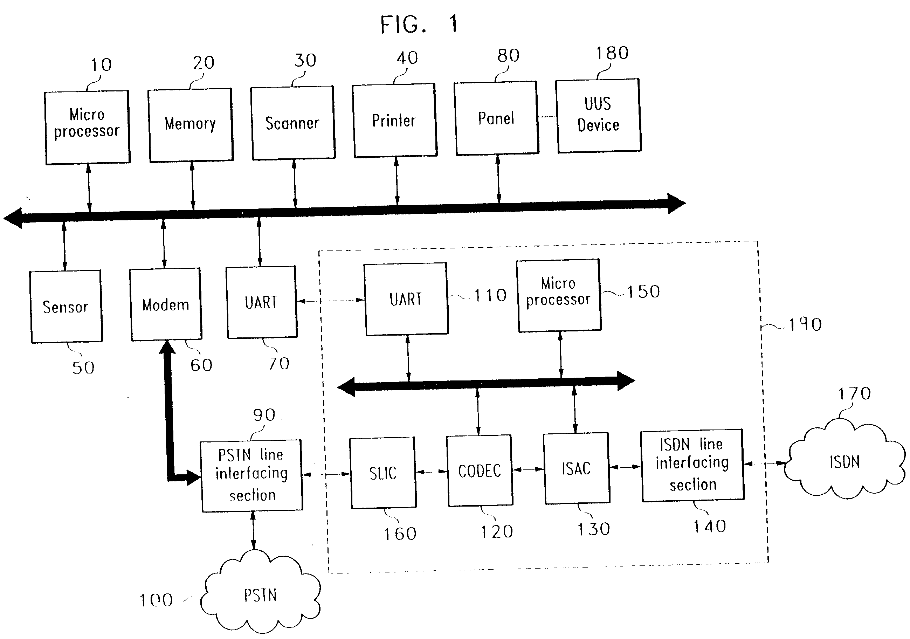

Figure 1 is a schematic block diagram showing a facsimile device having an S-type interface card according to an embodiment of the present invention that is connected to an integrated service digital network.

As shown in figure 1, a micro processor 10 controls the entire operation of the facsimile device according to a program. A memory 20 has program data, protocol data, character data, and data relating to transmission and reception stored therein. The micro processor 10 accesses and stores the data in the memory 20. A panel section 80 includes a plurality of keys to generate key data, a display device for inputting the key data into the micro processor 10 when the key data are generated and for displaying the data from the micro processor 10, and an UUS device 180 for performing the UUS function.

A scanner 30 scans a document and converts the document data into digital image data in a digital signal. Then, the scanner 30 provides the digital image data to the micro processor 10.

A modem 60 is controlled by the micro processor 10 and modulates image data into an output signal. Also, the modem 60 demodulates an input analog signal into the digital image data.

A printer 40 prints received facsimile data according to a control signal from the micro processor 10. A sensor 50 detects the amount of paper which remains in a tray and which is required by the document and provides information on the remaining amount of paper and information on the document to the micro processor 10. UARTs 70 and 110 analyse information on a D channel of the ISDN, and then transfer and receive a control information and a message. A CODEC 120 converts the analog signal into the digital signal using pulse code modulation.

An ISAC 130 performs line coding and a line activating/inactivating functions as class one functions of the ISDN for controlling the D-channel and a line access procedure on the D-channel as a class two function. Furthermore, the ISAC 130 transfers and receives the data to/from the SLIC 160 to transfer image data to the other facsimile device through the ISDN.

An ISDN line interfacing section 140 provides an interface for exchange of signals between the facsimile device and the ISDN. The SLIC 160 connects a terminal for digital signals to a terminal for analog signals and provides an interface for the exchange of the digital signals and analog signals between the terminals.

A PSTN line interfacing section 90 provides an interface for the exchange of signals from the PSTN 100 and signals from the ISDN 170. An S-type interface card 190 includes the UART 110, a micro processor 150, the SLIC 160, the CODEC 120, the ISAC 130, and the ISDN line interfacing section 140.

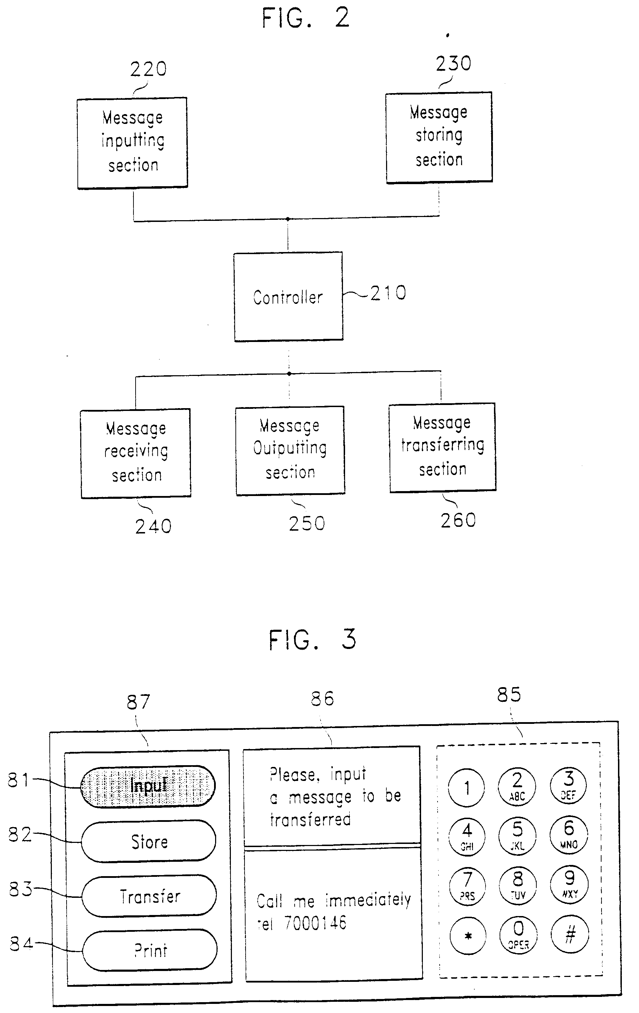

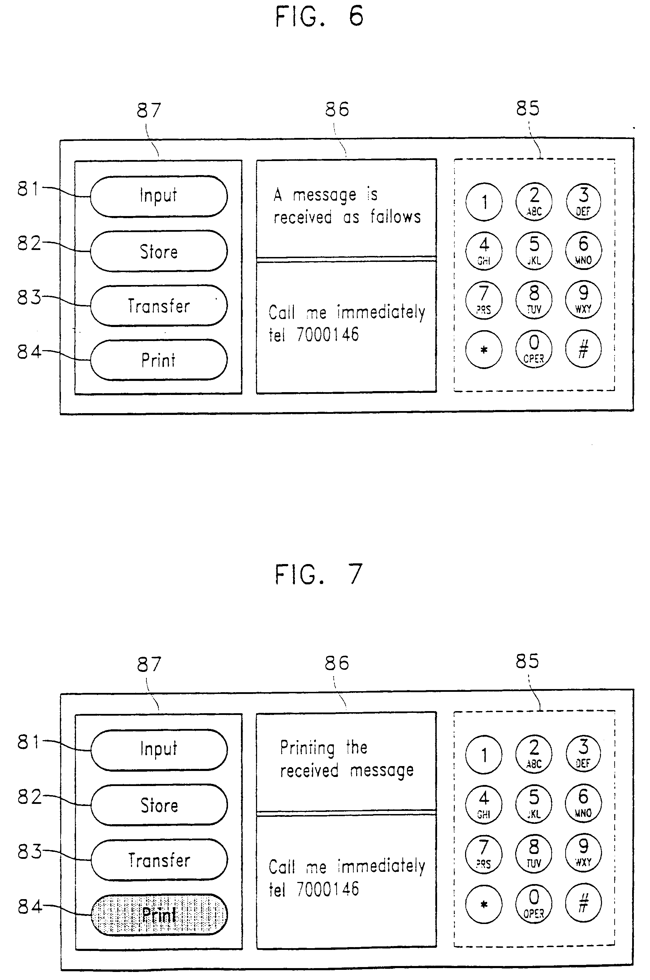

Figure 2 is a block diagram showing the functional structure of the UUS device according to an embodiment of the present invention. Figures 3 to 7 are views showing the operating panel of the facsimile device according to the embodiment of the present invention, in different states.

As shown in figures 2 and 3, the UUS device includes a message input section 220 for supporting a key 81 used for inputting a message to be transferred in the UUS manner, a message storing section 230 for supporting a key 82 used for storing an input message, a message transferring section 260 for supporting a key 83 used for transferring the stored message in the UUS manner, a message receiving section 240 for receiving a message and for displaying the received message on a liquid crystal display 86, a message outputting section 250 for supporting a key 84 used for outputting the received message, and a controller 210 for controlling the above sections.

The operation of the facsimile device according to the embodiment of the present invention will be described in detail with reference to figures 2 to 9.

Transferring a message in the UUS manner will be described with respect to the transferring function for transferring the message in a state where the facsimile device is connected to another other facsimile device.

Most of the facsimile devices have a plurality of keys used for inputting alpha-numeric characters and several function keys used for selecting one of various functions of the device. Therefore, the user can input a message into the facsimile device using the keys.

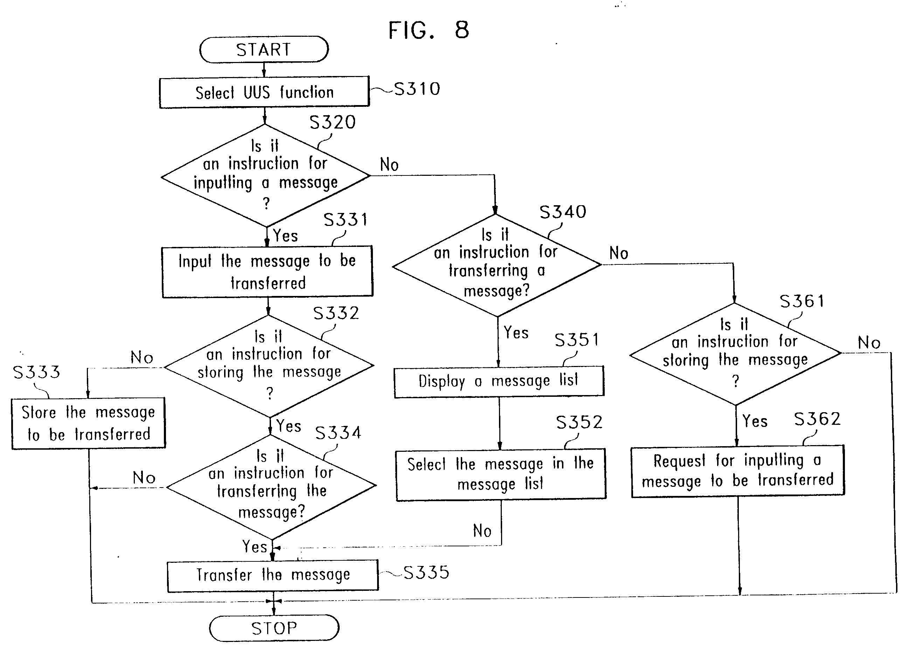

Figure 8 is a flow chart showing a process for storing and transferring an input message according to the embodiment of the present invention.

At a step S310, a specific function is selected. It is determined at step S320 whether the selected function is an instruction for inputting a message. If the selected function is not an instruction for inputting a message, it is determined, at step S340, whether the selected function is an instruction for transferring a message. If the selected function is not an instruction for transferring the message, it is determined, at step S361, whether the selected function is an instruction for storing a message.

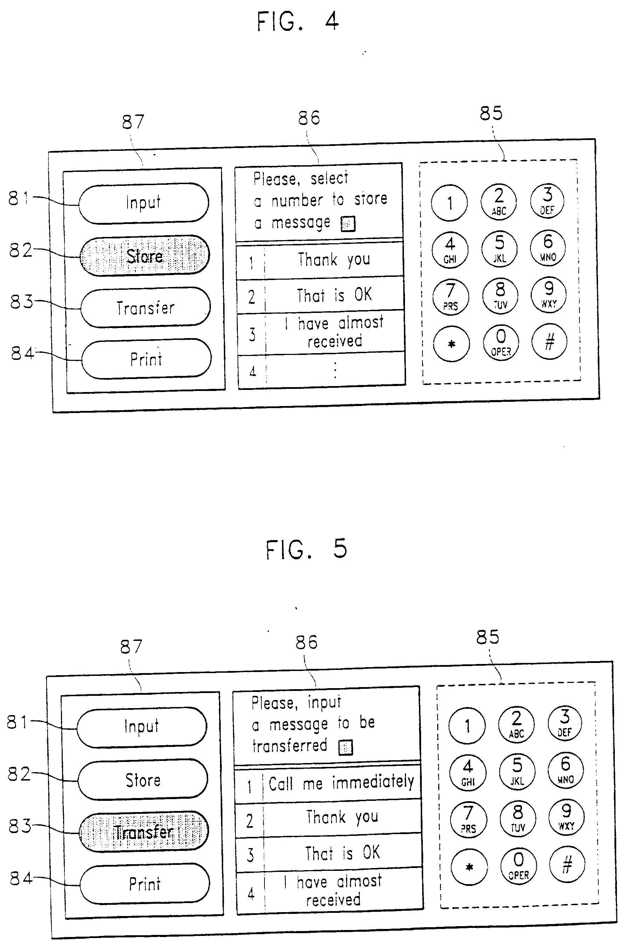

If the selected function is determined at step S320 to be an instruction for inputting a message, the message to be transferred is input via the alpha-numeric keys 85 at a step S331 and concurrently displayed on the liquid crystal display as shown in figure 3. It is then determined at step S332 whether an instruction for storing the message has been input as shown in figure 4.

If an instruction for storing the message has been input at the step S332, it is determined at step S334 whether an instruction for transferring the message has been input. When an instruction for transferring the message has been input at the step S334, the message is transferred to the other facsimile device, at a step S335.

On the other hand, if it is determined at step S340 that the selected function is an instruction for transferring the message, a message list stored in the message storing section 230 is displayed on the display device 86 at a step S351. Then, a message is selected from the message list which is displayed on the displaying device, at a step S352. At a step S335, only the selected message is displayed on the display device 86 and transferred to the other facsimile device.

If it is determined at step S361 that the selected function is an instruction for storing the message, a request for inputting a message to be transferred is displayed on the liquid crystal display 86, at a step S362.

As described above, in the facsimile device having an S-type interface card so as to be connected to the ISDN according to an embodiment of the present invention, since a message can be transferred and received to/from the other remote facsimile device in the UUS manner, the channels are effectively used for transferring and receiving the image data.

## Claims

1. A facsimile device comprising a message transferring and receiving device for transferring and receiving a message in a user-to-user signalling manner and an S-type interface card, which is able to be connected to an integrated service digital network, the device comprising:
an input means for inputting a message to be transferred;
storage means for storing an input message;
transfer means for transferring a stored message in the user to user signalling manner;
receiving means for receiving a transferred message;
output means for outputting a received message; and
a controller for receiving input signals from the input means, storage means, transfer means, receiving means and output means and for generating a control signal corresponding to the each input signal.

2. A facsimile device as claimed in claim 1, wherein the input means and the output means comprise keys forming part of the same key pad.

3. A method for transferring and receiving a message using a facsimile device having an S-type interface card, the method comprising the steps of:
inputting the message to be transferred;
transferring the input message in an user-to-user manner; and
receiving the transferred message in the user-to-user manner.

4. A method as claimed in claim 3, further comprising the step of storing the message to be transferred after the step of inputting the message to be transferred, wherein the stored message is transferred.

5. A method as claimed in either claims 3 or 4, wherein the step of inputting the message includes the steps of:
displaying a list of stored messages including the message to be transferred; and
selecting the message to be transferred from the list of stored messages.

6. A method as claimed in any of claim 3 to 5, wherein the step of receiving the message to be transferred includes the steps of:
outputting the received message on a display;
determining whether or not to print the received message; and
printing the received message when an order to print the received message has been input.

7. A method as claimed in any of claims 3 to 6, wherein the steps of transferring and receiving utilise the D-channel of an ISDN.

8. A method as claimed in any of claims 3 to 7, wherein image data of a facsimile is transferred or received using a B-channel of the ISDN.

9. A method as claimed in any of claims 3 to 8 or a device as claimed in either of claims 1 or 2, wherein the facsimile device is an analog facsimile device.
